# EUROPEAN PATENT APPLICATION

(11) **EP 1 787 718 A1**
(43) Date of publication of application: **23.05.2007**
(21) Application number: 06123369.8
(22) Date of filing: 02.11.2006
(51) Int. Cl.: B01J 20/281, B01J 20/30

(54) **Gluing of beads for use in a separation column**

(30) Priority: 16.11.2005 EP 05110782
(71) Applicant: Agilent Technologies, Inc., Santa Clara, CA 95051 (US)
(72) Inventor: Rozing, Gerard, 76228, Karlsruhe (NL); Glatz, Bernd, 71292, Friolzheim (DE)
(74) Representative: Barth, Daniel Mathias

(57) **Abstract**

A packing composition (110) for inserting in a fluidic device (100), the packing composition (110) comprising a packing material (114) adapted for separating different components of a sample, and an adhesive substance (115) to adhere to the packing material (114).

## Description

### BACKGROUND ART

The present invention relates to column beads gluing.

In liquid chromatography, a fluid is pumped through a column comprising material which is capable of temporally separating the different components (analytes) of a sample dissolved in the same or another fluid. Such a material, so-called beads which may comprise of silica gel, may be filled into a column tube which may be connected to other elements (like a control unit, containers including sample and/or buffers) using fitting elements.

During operation, a sample traverses the column tube filled with the analyte separating material. Due to the physical interaction between the separating material and the different components in the sample, a separation of these different components may be achieved. Consequently, the separating material filled in the column tube is subject of a permanent mechanical force generated by the fluid pumped from an upstream connection to a downstream connection with a relatively high pressure.

US 5,908,552 discloses a column for capillary chromatographic separations, for example high performance liquid chromatography, including a column bed of packing material arranged in the inner bore of a column.

US 5,858,241 discloses another column for capillary chromatographic separations.

US 2004/0156753 A1 by the same applicant Agilent Technologies discloses a polymer-based microfluidic device comprising two separate substrates which are bonded together to form channels where gases or liquids may move to accomplish applications of the microfluidic device. Thus, an internal cavity may be formed as a lumen or a channel of the microfluidic device.

The unpublished document PCT/EP2005/050473 by the same applicant Agilent Technologies discloses a microfluidic device comprising at least one inlet port, at least one flow path coupled to the inlet port, and at least one separation element coupled to the flow path, wherein the separation element comprises a packing material and is adapted for separating different components of a sample, wherein the microfluidic device comprises at least one retaining device adapted for retaining the packing material of the separation element.

Zhang, XM, Huang, S (2001) "Single step on-column frit making for capillary high-performance liquid chromatography using a sol-gel technology", Journal of Chromatography A 910(1), pages 13 to 18 discloses one step frit making in packing fused-silica capillary column of high-performance liquid chromatography. On-column frit was formed through gelling of sol solution with packing materials, silica gel, and jointing the particles together with capillary wall through bonded and immobilized networks.

Chirica, GS, Remcho, VT (2000) "A simple procedure for the preparation of fritless columns by entrapping conventional high performance liquid chromatography sorbents", Electrophoresis 21(15), pages 3093 to 3101, discloses a method of immobilizing liquid chromatography packing material inside fritless capillaries. The entrapment procedure has minimal influence on the structure and chromatographic properties of the original reverse-phase sorbent.

Chirica, GS, Remcho, VT (2000) "Fritless capillary columns for HPLC and CEC prepared by immobilizing the stationary phase in an organic polymer matrix", Analytical Chemistry, 72(15), pages 3605 to 3610, discloses an immobilized particle separation media for capillary liquid chromatography. A mixture of porogenic solvents and methacrylate-based monomers is pumped through a packed column to provide, following a polymerization step, an organic matrix.

Adam, T, Unger, KK, Dittmann, MM, Rozing, GP (2000) "Towards the column bed stabilization of columns in capillary electroendosmotic chromatography - Immobilization of microparticulate silica columns to a continuous bed", Journal of Chromatography A, 887, pages 327 to 337 discloses a method of generating a continuous bed inside a CEC column. The column bed is composed of silica which is completely immobilized by a hydrothermal treatment. This process may eliminate the manufacture of frits of both ends of the column.

Ratnayake, CK, Oh, CS, Henry, MP (2000) "Particle loaded monolithic sol-gel columns for capillary electrochromatography: A new dimension for high performance liquid chromatography", 23, pages 81 to 88, HRC-Journal of High Resolution Chromatography, discloses particle-loaded monolithic sol-gel columns.

### DISCLOSURE

It is an object of the invention to provide an efficient packing composition for inserting in a fluidic device. The object is solved by the independent claims. Further embodiments are shown by the dependent claims.

According to an exemplary embodiment of the present invention, a packing composition (for example a multi-component material for a liquid chromatography column) for inserting in a fluidic device (for example a high-performance liquid chromatography apparatus) is provided, the packing composition comprising a packing material (for example a silica gel) adapted for separating different components of a sample (for example an analyt pumped through a column tube), and an adhesive substance to adhere to the packing material (for example a high molecular polymer glue to glue together particles of the separating material without entering the particles).

According to another exemplary embodiment, a fluidic device for separating different components of a sample is provided, the fluidic device comprising a column tube, and a packing composition having the above mentioned features inserted in at least a part of the column tube.

According to still another exemplary embodiment, a method of manufacturing a packing composition for a fluidic device is provided, the method comprising adhering an adhesive substance to packing material adapted for separating different components of a sample.

According to an exemplary embodiment, a substance is provided comprising a mixture of a packing material (which may also be denoted as separation material) for liquid chromatography on the one hand and a suitable glue for connecting individual particles of such a packing material on the other hand. Using the glue, different particles of the packing material may be securely adhered to one another by gluing. When such a material is filled in at least a part of a column tube of a liquid chromatography device, a completely immobilized and adhered section of such material within the column tube can be obtained. Even under the influence of a high pressure with which fluid is pumped through such a material, it may be securely prevented that the packing material is removed from the column tube during the performance of a liquid chromatography experiment.

Thus, it may be ensured that separation material is washed out of the column tube and/or is separated from inner walls of the column tube. Consequently, the glue may form a stable and robust particle connecting matrix which additionally may ensure that an attracting adhering force is formed between inner walls of a column tube and the glued particles as well as between different glued particles.

According to an exemplary embodiment, it may be avoided that porous beads are washed out of a biochip by gluing the beads together over at least a part of a column. The glue may be applied in such a manner that it is located between adjacent beads but is prevented from entering pores of the beads which pores should remain free to fulfill their function in the context of separation. In liquid chromatography, a main part of the separation function is provided by the inner surface of the pores of the column beads, which inner surface may be much larger than the external surface of the various beads adjacent to one another.

An appropriate glue may couple between beads without entering into the porous beads and thus without blocking pores of the beads. This may be obtained using a high molecular weight polymer glue, having molecules which are too large as to be capable to enter the pores.

It may be possible that the glued beads or the beads to be glued are inserted in a column tube over the entire extension of the column bead, or only at one or more certain portions along the extension of the column, such as at one or more end portions or at a central portion. Therefore, conventional frits positioned at end portions of a column tube to sandwich packing material therebetween may be dispensible. In other words, adhering material sticking together column beads at end portions of the column tube may serve as some kind of "microfrits" or may replace conventional frits.

Gluing defined portions of packing material along a column tube or gluing packing material along an entire extension of a column tube may be initiated using providing light, heat, oxygen, etc.

Therefore, in the context of liquid chromatography (for instance high performance liquid chromatography, HPLC), the packing material may be provided in such a manner that the beads are connected to one another, mediated by the glue immobilizing the beads and, additionally, providing an attracting force with the connected beads. Thus, not only a matrix is provided receiving beads in empty portions of the matrix. In contrast to this, an adherence between neighbored particles may be obtained. This may improve the stability of such a column. In liquid chromatography, a fluid under investigation may comprise a solvent in which different components (analytes) of a sample may be dissolved.

The column material may be securely prevented from being washed out of the chip. It may be advantageous to provide the glue in a relatively small quantity so as to adhere selectively only adjacent portions of the beads, wherein the glue is prevented from entering the porous spheres. This may be obtained by a polymer glue having molecules of sufficient size, for instance.

Therefore, according to an exemplary embodiment, a packing material for columns is provided, particularly a high performance liquid chromatography packing material (HPLC packing material). Therefore, such a column material may be used for separating different components of an analyte in a qualitative and/or quantitative manner, in order to identify different components of a sample. Such a packing material may separate the different components based on different affinities of the individual substances with respect to the column material. Therefore, the fluid/the analyte may be pumped (even with a relatively high pressure of some hundred bar) through the packing material which may be stabilized and fixed within the column tube using the glue.

As beads, porous silica (silicon dioxide) may be used in a pulverized form, for instance with a particle size of 3 µm to 10 µm. Such a powder material may have an inner surface of the beads per mass unit of, for instance, 150 m²/g to 300 m²/g.

According to an exemplary embodiment, the beads material is retained within the column tube of flowing liquid using a gluing force. Conventionally, such a function may be fulfilled using frits provided at one or both end portions of a column tube adjacent to fittings, wherein the frits (which may be made of sintered material) prevents the bead material from leaving the column tube under the influence of the analyt stream.

However, at very small dimensions of columns (for instance an inner surface of a column tube capillary of 200 µm to 300 µm or less), it may be difficult to manufacture and mount such small frits. Particularly in such a scenario, it may be more appropriate to connect beads at least at a portion of the column tube using a glue, instead of providing separate frits. However, according to an exemplary embodiment, frits may be provided additionally so as to further stabilize the glue fixed column beads.

In order to prevent that the glue enters the pores of the separating material, a polymer glue may be used having a molecular size which is larger than the pore size of the beads. Therefore, the high active area within the beads may be, at least partially.

For instance, the pore size may be about 250 Å, wherein the size of a beads may be in the order of 3 µm to 5 µm. Polypeptide or protein molecules to be separated and treated with the column material may have a dimension of 20 Å so that it may be possible to transport the polypeptides or proteins through the pores of the beads. These pores should remain permeable for the fluid even after the gluing. Thus, the gluing should effect essentially only the outer portions of the beads. This may be obtained by selecting the glue molecules to be larger than the pores of the beads. Then, the glue molecules can only be positioned between beads to bond different beads together. In contrast to this, the glue molecules are to large to enter pores of the beads.

Additionally or alternatively, by using a suitable solvent, it may be prevented that the glue enters the pores. For instance, a non-polar solvent may be used, and preferably of a molecular size smaller than the pores of the beads. Then, the pores may be filled with the solvent before gluing, and the solvent may be removed from the pores after gluing. By taking this measure, it may even be possible that a glue with a molecular size is used which size is smaller than the size of the pores of the beads which pores are occupied by the solvent during the gluing. After the gluing, the glue particles are immobilized and thus prevented from blocking the pores, even when the auxiliary solvent has been removed from the pores.

It may also be possible to provide cross linkers between glue molecules, so that clusters of glue are formed which are too large to enter the pores.

In the following, further exemplary embodiments will be described.

Next, exemplary embodiments of the packing composition will be described. However, these embodiments also apply for the fluidic device and for the method of manufacturing a packing composition.

The packing composition may include packing material comprising beads which are at least permeable for the analytes. In other words, the beads may be configured in such a manner that fluid may pass the beads. For this purpose, microchannels or pores may be provided in the packing material having a size which allows the analytes to pass these (micro- or nano-)cavities.

At least some of the beads may comprise one or more pores being permeable for the analytes. Such pores or (micro- or nano-)channels may allow to be dimensioned in order to separate components of a sample having particles of a predetermined dimension.

The packing material may comprise one of the group consisting of glass, polymeric powder, silicon dioxide, and silica gel. However, any packing material can be used which has material properties allowing an analyte passing through this material to be separated into different components, for instance due to a different kind of interaction or affinity between the packing material and the analyte.

The adhesive substance may be located between at least some of the beads so as to adhere between such beads. By providing the adhesive substance only between the beads, not inside the beads, and preferably only at particular positions of the beads, the active surface for separating the components of the analyte may be kept sufficiently large. Simultaneously, a proper stability or robustness may be obtained for retaining the packing material within a column bed.

The adhesive substance may comprise molecules having physical and/or chemical material properties so that an interior of the beads remains free of the adhesive substance. For instance, the size of the pores which shall be traversed by the analyte molecules should be small enough that the adhesive substance molecules are prevented from passing through the pores. Additionally or alternatively, the outer surface of the column beads may be treated in such a manner that an adherence of the adhesive substance at this outer surface is promoted, whereas the material properties inside of the beads may inhibit accumulation of glue there.

For instance, the adhesive substance may comprises one of the group of cyanoacrylates curable by UV radiation (e.g. Loctite® 4304^{™}) or of an epoxy resin curable with a hardener (e.g. Loctite® M-21 HP^{™}). The adhesive substance is provided in addition to the column beads, so that not only an adherence between adjacent column beads is achieved, and not only an embedding of column beads in a matrix without fixing the column beads at the matrix material is provided. In contrast to this, a two-component system is provided, including the adhesive substance and the column beads, which allows the adhesive substance to bridge adjacent column beads and to adhere actively to each of the column beads. This allows to fix the column beads in a very stable and robust manner.

The beads may have a size in the range of 1 µm to 10 µm (more particularly in the range of 3 µm to 7 µm), and the pores of the beads may have a size in the range of 0.01 µm to 0.1 µm (more particularly in the range of 0.03 µm to 0.07 µm). These dimensions may be a good choice so that the pores provide a high interior active surface of the beads, and the pores still have the capability to remain free of glue material. Therefore, a proper fixing of the column beads and a column tube can be achieved, and a high performance material separation.

The adhesive substance may be a high-molecular weight polymer glue. By using such a high-molecular weight polymer glue, sufficiently big clusters of molecules may be obtained which are prevented from blocking the pores. Such a polymer glue may be constituted by sufficiently large sized molecules, for instance having a molecular weight of at least 10000 Dalton, particularly of at least 50000 Dalton, more particularly of at least 100000 Dalton.

In the following, exemplary embodiments of the fluidic device for separating different columns of a fluid will be described. However, these embodiments also apply for the packing composition and for the method of manufacturing a packing composition for a fluidic device.

The fluidic device may be adapted as a fritless fluidic device. In other words, the fluidic device may be adapted in such a manner that no frits are provided between fitting elements and two end portions of the column tubes, since the stability functionality of the frits may be fulfilled by the glued column beads. Therefore, the fluidic device may be manufactured with low costs and may be particularly suitable for small dimensions, since the production of frits becomes more and more difficult when the dimensions of the column tube, particularly the inner surface diameter, decreases and decreases.

The column tube may comprise a first portion adapted to be coupled to a first fitting element adapted for fitting the column tube to another element (for instance a liquid chromatography control apparatus and/or containers including sample, solvent, fluid, etc.) within a fluid path, wherein the packing composition may be inserted into the first portion. Particularly at the downstream end of the column tube, that is to say at the end portion of the column tube at which the analyte to be separated leaves the column tube, it may be appropriate to provide the glued column beads to avoid washing out of the packing material from the column beads. However, additionally or alternatively, the other end portion of the column tube (that is to say the upstream end portion) may be provided with the glued column beads to improve stability.

The column tube may therefore comprise a second portion adapted to be coupled to a second fitting element adapted for fitting the column tube to another element within the fluid path, wherein the packing composition is inserted into the second portion. As already mentioned above, one or both of the end portions of the column tube adjacent to the two fitting elements may be provided with glued column beads. A portion between those end portions may or may not be filled with glued or non-glued filling material.

The column tube may comprise a third portion located in a central part of the column tube (for instance between the first portion and the second portion), wherein the third portion may be free of the packing composition. This third portion which may also be denoted as an intermediate portion between two end portions may either be free of any material or may be filled with non-glued column beads. Therefore, a packing material adapted for separating different components of a sample and being free of an adhesive substance may be inserted into the third portion. When the third portion is free of an adhesive substance, the entire separation functionality may be particularly well, since no disturbing effects originating from the presence of glue may occur.

The fluidic device may comprise a first frit arranged between the first fitting element and the packing composition inserted into the first portion. Therefore, even if a frit may be dispensible according to exemplary embodiments, it may additionally be possible to provide a frit so as, together with the glued column beads, further improve the stability of the system.

The fluidic device may comprise a second frit arranged between the second fitting element and the packing composition inserted into the second portion. Therefore, also a second frit may be arranged between the second fitting element and the packing composition inserted into the second portion.

The column tube may have an inner diameter of less than or equal of 300 µm. Particularly at such small diameters, it may be advantageous to substitute conventional frits by the adhesive column beads, since the production of small dimensioned frits may be costly and difficult.

The packing composition may be inserted only into a part of the column tube. It may not be necessary to provide the column beads with glue all over the column tube. It may be sufficient to provide one or both end portions or a central portion of the column tube with the glued column beads. It may be advantageous to reduce or minimize the amount of separation material mixed with the glue, since glue free portions of the column beads may have a particular advantageous material separation function, since no active surface is occupied at all by glue in these portions.

However, the packing composition may also be inserted in the entire column tube, for instance when a pressure-stable or pressure-resistant device is desired, or when a particularly robust arrangement is desirable.

The fluidic device may have an essentially cylindrical shape. However, in contrast to this, any other geometrical configuration of the fluidic device is possible, for instance a tube-like device or a device having a polygonal cross-sectional shape (for instance triangular, rectangular or the like).

The fluidic device may comprise a first essentially planar member and may comprise a second essentially planar member, wherein, when the first essentially planar member is coupled to the second essentially planar member, the column tube may be formed using at least one recess formed in the first essentially planar member and/or in the second essentially planar member. For instance, a configuration which is shaped similar like a "credit card" may be provided.

Such a configuration may be shaped similar as in Fig. 6a, Fig. 6b and corresponding description of US 2004/0156753 A1. Fig. 6a, Fig. 6b and the corresponding description of US 2004/0156753 A1 are explicitly incorporated in the disclosure of this application.

It may be particularly advantageous to fill the cavity of such a configuration with the column beads according to an exemplary embodiment, since small dimensioned tubes are not easily compatible with a conventional frit solution.

The fluidic device may be adapted to analyze at least one physical, chemical, or biological parameter of at least one compound of the sample. The term "physical parameter" may particularly denote a size of the analyte. The term "chemical parameter" may particularly denote a concentration of a fraction of the analyte, an affinity parameter, or the like. The term "biological parameter" may particularly denote a concentration of a protein, a gene or the like in a biochemical solution, a biological activity of a component, etc.

The fluidic device may be adapted as at least one of a sensor device, a test device for testing a device under test or a substance, a device for chemical, biological and/or pharmaceutical analysis, a capillary electrophoresis device, a liquid chromatography device, a gas chromatography device, an electronic measurement device, and a mass spectroscopy device. Particularly, the fluidic device may be realized as a high performance liquid chromatography device (HPLC) in which different fractions of an analyt may be separated and investigated.

The fluidic device may be adapted as a microfluidic device. The term "microfluidic device" may particularly denote a fluidic device as described herein which allows to convey fluid through micropores, that is pores having a dimension in the order of magnitude of micrometers.

In the following, exemplary embodiments of the method of manufacturing a packing composition for a fluidic device will be described. However, these embodiments also apply for the packing composition and for the fluidic device.

The method may comprise inserting the packing composition in the column tube for manufacturing a fluidic device for separating different components of a sample. For instance, the material may first be filled in, and then end portions of the packing material may be selectively provided with glue. Alternatively, a mixture of glue and packing material may be inserted in a desired mixture ratio into the column tube. Then, the glue may be hardened, for instance initiated by irradiation with light, by heat or by supply with oxygen. Alternatively, the mixture of column beads and glue may be inserted sufficiently fast into the column tube that the glue does not solidify before the fill in procedure is complete.

Then, fitting elements may be provided at the end portions of the column tube, and the fitting elements may be connected to other elements of a separation system. Subsequently, a sample to be analyzed may be pumped through the assembled analysis device, and the different components may be separated under the influence of the separation material, that is to say the packing material. The glue may retain the column beads within the column tube and connected to walls of the column tube.

The adhering may be initiated by one of the group consisting of irradiating the adhesive substance with electromagnetic radiation (for instance ultraviolet radiation, visible light, infrared radiation, X-rays, etc.), supplying heat to the adhesive substance (for instance heating portions of the column tube, for instance with a heating coil which may be provided around the column tube), and supplying oxygen (for instance on oxygen enriched atmosphere) to the adhesive substance.

The method may further comprise, before providing the adhesive substance for adhering, treating the packing material with a solvent adapted to fill pores of the packing material so as to prevent the adhesive substance from entering the pores of the packing material when providing the adhesive substance. By taking this measure, the interior of the pores of the beads may be filled with a suitable solvent which keeps glue out of the pores. By taking this measure, it may be assured that only the portions between adjacent column beads are covered with glue material, since the pores are filled with the solvent. Therefore, no space is left in the beads to be filled with glue. After having fixed the column beads with the adhesive material in an irreversible or immobilized manner, the solvent may be removed from the pores, for instance by evaporating or by a special chemical treatment.

The packing material may be treated with a non-polar solvent. Such a solvent may reliably ensure that no glue material is filled into the pores of the bead material.

### BRIEF DESCRIPTION OF DRAWINGS

Other objects and many of the attendant advantages of embodiments will be readily appreciated and become better understood by reference to the following more detailed description of embodiments in connection with the accompanied drawings. Features that are substantially or functionally equal or similar will be referred to by the same reference signs.

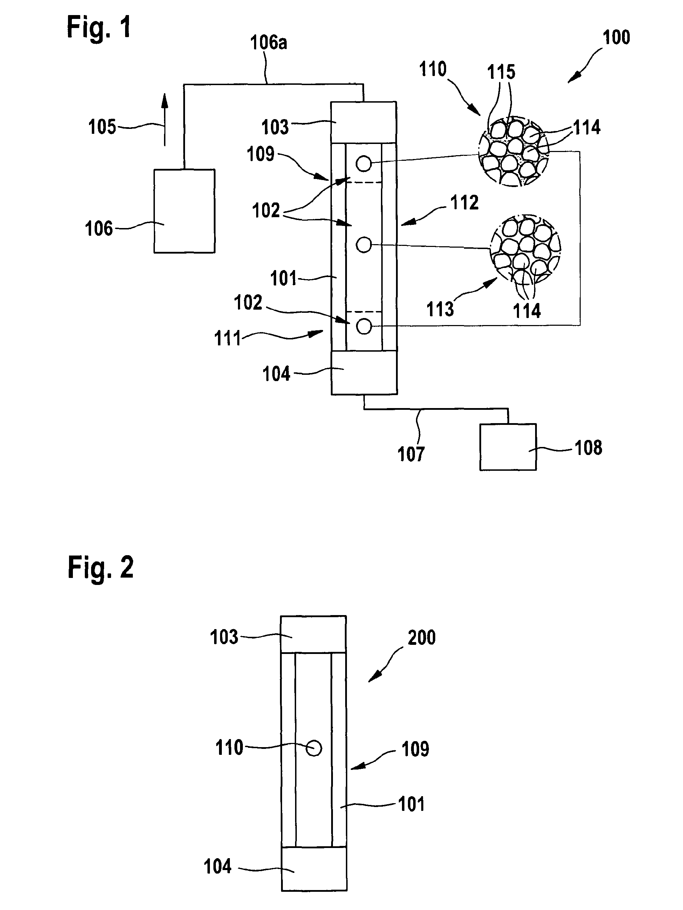

Fig. 1 to Fig. 4 illustrate fluidic devices according to exemplary embodiments.

The illustration in the drawing is schematically.

In the following, referring to **Fig. 1**, a fluidic device 100 according to an exemplary embodiment will be described.

The fluidic device 100 is adapted as a system for carrying out liquid chromatography investigations. The fluidic device 100 for separating different components of a sample which can be pumped through the apparatus 100 comprises a column tube 101 which is shaped as a hollow cylinder. Within the cylinder, a tubular reception is defined which is filled with a packing composition 102.

The fluidic device 100 is adapted as a fritless fluidic device. In other words, no frits are provided between end portions of the column tube 101 on the one hand and of a first fitting element 103 provided upstream the column tube 101 and a second fitting element 104 located downstream of the column tube 101 on the other hand. A flowing direction of fluid which is separated using the fluidic device 100 is denoted with reference numeral 105.

A separation control unit 106 is provided which pumps fluid under a pressure of, for instance, 100 bar through a connection tube 106 and from there through the fitting element 103 into the column tube 101. After having left the column tube 101 and the second fitting element 104, a second tube or pipe 107 transports the separated analyte to a container and analysis unit 108. The container and analysis unit 108 includes cavities or containers for receiving the different components of the sample, and may also fulfill computational functions related to the analysis of the separated components.

The column tube 101 comprises a first portion 109 which is coupled to the first fitting element 103 for fitting the column tube 101 to the control unit 106 within the fluid path 105. A first packing composition 110 is inserted into the first portion 109. An enlarged view of the packing portion 110 is shown in Fig. 1. Furthermore, the column tube 101 comprises a second portion 111 coupled to the second fitting element 104 and adapted for fitting the column tube 101 to the container and analysis unit 108. The first packing composition 110 is inserted also into the second portion 111.

Beyond this, the column tube 101 comprises a third portion 112 located in a central part of the column tube 101 between the first portion 109 and the second portion 110. The third portion 112 comprises a second packing composition 113. The second packing composition 113 is shown in another enlarged view of Fig. 1.

Thus, only in a part of the column tube 101, the first packing composition 110 is inserted, and the remaining part of the column tube 101 is filled with the second composition 113.

In the following, the first packing composition 110 will be described in more detail.

The first packing composition 110 comprises a silica powder as a packing material or as a separation material for separating different components of the sample, wherein the packing material is provided in the form of beads 114. Furthermore, a polymer glue 115 is provided between adjacent beads 114, so as to connect adjacent beads 114 by this glue. However, the glue is prevented from entering the pores of the beads 114 which have the function to separate different components of the sample. Therefore, the polymer glue 115 only fills spaces between adjacent beads 114 leaving the porous structure of the beads 114 unchanged. Hence, the beads 114 are permeable for the sample and comprise pores. The adhesive substance 115 is composed of particles having a size larger than the pores of the beads 114. The adhesive substance 115 is high-molecular weight polymer glue.

In contrast to this, the second packing material 113 is adapted for separating different components of the sample and is free of any adhesive substance 115. Therefore, the second packing composition 113 consists of the beads 114 which are lying close to one another without being glued or adhered to one another.

Since the first packing composition 110 provides fixed and unremovable "frit-like" end portions of the inner tube fluidic device 100, even when a fluid/an analyt is pumped with a high pressure through the column tube 101, the first packing composition 110 and the sandwiched second packing material 113 are prevented from being washed out of the column tube 101.

In the following, referring to **Fig. 2**, a fluidic device 200 according to an exemplary embodiment will be described.

The fluidic device 200 differs from the fluidic device 100 in that the column tube 101 is provided as a single portion 109 which is filled with the first packing composition 110 described referring to Fig. 1. In other words, along the entire extension of the column tube 101 of Fig. 2, the same separation material is provided, namely a mixture of porous column beads 114 interconnected using glue 115 so as to form a stable and adhering matrix.

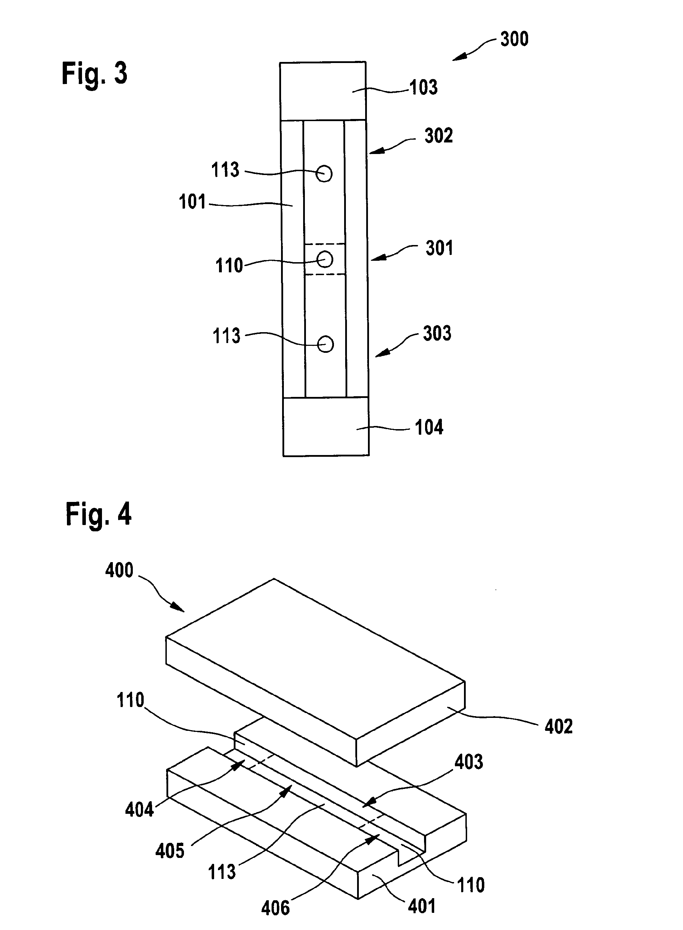

In the following, referring to **Fig. 3**, a fluidic device 300 according to an exemplary embodiment will be described.

As in the case of Fig. 1, the column tube 101 is divided into three portions, namely a first portion 301 next to the fitting element 103, a second central portion 302 and a third portion 303 located between the second portion 302 and the second fitting element 104. In contrast to Fig. 1, in the scenario of Fig. 3 only the central portion 302 is filled with column beads which are adhered to one another using glue. In contrast to this, the first portion 301 and the third portion 303 consist of pure column beads 114 without any connection to one another.

It may be sufficient for particular applications that only such a central portion 302 is filled with column beads 114 connected to one another using glue 115.

In the following, referring to **Fig. 4**, a microfluidic device 400 according to an exemplary embodiment will be described.

The microfluidic device 400 comprises a first essentially planar member 401 and a second essentially planar member 402. In an operation state in which the first essentially planar member 401 is coupled to the second essentially planar member 402 (for instance using a glue connection), a column tube is formed using the recess 403 which is formed in the first essentially planar member 401 and using the planar surface of the second essentially planar member 402. The recess 403 forms, when the members 401 and 402 are connected to one another, a channel-like structure which has a function similar to the inner bore of the column tube 101 of Fig. 1 to Fig. 3.

The microfluidic device 400 can be used in a similar manner as described in Fig. 6a, 6b and corresponding description of US 2004/0156753 A1.

Fig. 4 illustrates a patterned polymer substrate 401 having the internal cavity 403 and the other flat substrate 402 that can be bonded with the patterned polymer substrate 401 to form the microfluidic device 400. The flat substrate 402 can be formed by any solvent resistant material, including, but not limited to, polymer or glass. The patterned polymer substrate 401 can be formed using any fabrication technique, including embossing, laser ablation, injection molding, etc. It should further be understood that the microfluidic device 400 can include multiple channels 403, and each channel 403 can include a packing composition with a separation material and a glue connecting the components of the separation material to one another and to the walls defined by the channel 403.

As shown in Fig. 4, the channel 403 is divided into three portions, namely a first portion 404 filled with the first packing composition 110 as defined above, a second central portion 405 filled with the second composition 113 as defined above, and a third portion 406 filled with the first packing composition 110 as defined above.

In order to manufacture the microfluidic device 400, column beads are inserted into the entire channel 403. Then, glue is added selectively to the first portion 404 and to the third portion 406, and gluing is initiated by applying heat. Therefore, at the first and third portions 404, 406, a bonding between individual column beads and between the column beads and the walls of the channel 403 are formed, whereas in the central portion 405, the column beads remain without glued.

When sample is inserted for instance at the first portion 404 and is separated by the function of the separation material provided within the entire channel 403, at the second end portion 406, the different sample components are separated. Furthermore, since the end portions 404, 406 are mechanically fixed to the walls and to the components defining these portions, it is avoided that the column beads are washed out of the channel 403 using a fluid pumped through the channel 403.

It should be noted that the term "comprising" does not exclude other elements or processes and the "a" or "an" does not exclude a plurality. Also elements described in association with different embodiments may be combined. It should also be noted that reference signs in the claims shall not be construed as limiting the scope of the claims.

## Claims

1. A packing composition (110) for inserting in a fluidic device (100), the packing composition (110) comprising
a packing material (114) adapted for separating different components of a sample; and
an adhesive substance (115) to adhere to the packing material (114).

2. The packing composition (110) of claim 1,
wherein the packing material (114) comprises beads being at least partially permeable for the sample.

3. The packing composition (110) of claim 2, comprising at least one of the following features:
at least some of the beads comprise one or more pores being permeable for the sample;
at least some of the beads comprise one or more pores being permeable for the sample, wherein the adhesive substance (115) is composed of particles having a size larger than the pores of the beads;
the adhesive substance (115) is located between at least some of the beads so as to adhere between such beads;
the adhesive substance (115) comprises molecules having physical and/or chemical material properties so that an interior of the beads remains free of the adhesive substance (115);
the beads have a size in a range of 1 µm to 10 µm;
at least some of the beads comprise one or more pores being permeable for the fluid, wherein the pores of the beads have a size in a range of 0.01 µm to 0.1 µm;

4. The packing composition (110) of claim 1 or any one of the above claims, comprising at least one of the following features:
the packing material (114) comprises one of the group consisting of glass, polymeric powder, silicon dioxide, and silica gel;
the adhesive substance (115) comprises one of the group consisting of cyanoacrylate and epoxy resin;
the adhesive substance (115) is a high-molecular weight polymer glue.

5. A fluidic device (100) for separating different components of a sample, the fluidic device (100) comprising
a column tube (101);
a packing composition (110) of claim 1 or any one of the above claims inserted in at least a part of the column tube (101).

6. The fluidic device (100) of claim 5, comprising at least one of the following features:
the fluidic device (100) is adapted as a fritless fluidic device;
the column tube (101) comprises a first portion (109) adapted to be coupled to a first fitting element (103) adapted for fitting the column tube (101) to another element (106) within a fluid path (105), wherein the packing composition (110) is inserted into the first portion (109);
the column tube (101) comprises a second portion (111) adapted to be coupled to a second fitting element (104) adapted for fitting the column tube (101) to another element (107) within the fluid path (105), wherein the packing composition (110) is inserted into the second portion (111);
the column tube (101) comprises a third portion (112) located in a central part of the column tube (101), wherein the third portion (112) is free of the packing composition (110).

7. The fluidic device (100) of claim 6, comprising at least one of the following features:
a packing material (113) adapted for separating different components of a sample and being free of an adhesive substance (115) is inserted into the third portion (112);
the fluidic device (100) comprises a first frit arranged between the first fitting element (103) and the packing composition (110) inserted into the first portion (109);
the fluidic device (100) comprises a second frit arranged between the second fitting element (104) and the packing composition (110) inserted into the second portion (111);

8. The fluidic device (100) of claim 5 or any one of the above claims, comprising at least one of the following features:
the column tube (101) has an inner diameter of less than or equal to 300 µm;
the packing composition (110) is inserted only into a part (302) of the column tube (101);
the packing composition (110) is inserted into the entire column tube (101);
the fluidic device (100) has an essentially cylindrical shape;
the fluidic device (400) has an essentially planar shape;
the fluidic device (400) has an essentially planar and rectangular shape;
the fluidic device (400) comprises a first essentially planar member (401) and comprises a second essentially planar member (402), wherein, when the first essentially planar member (401) is coupled to the second essentially planar member (402), the column tube (101) is formed using at least one recess (403) formed in the first essentially planar member (401) and/or using at least one recess (403) formed in the second essentially planar member (402);
the fluidic device (100) is adapted to analyze at least one physical, chemical, or biological parameter of at least one compound of the sample;
the fluidic device (100) is adapted as at least one of a sensor device, a test device for testing a device under test or a substance, a device for chemical, biological and/or pharmaceutical analysis, a capillary electrophoresis device, a liquid chromatography device, a gas chromatography device, an electronic measurement device, and a mass spectroscopy device;
the fluidic device (100) is adapted as a microfluidic device.

9. A method of manufacturing a packing composition (110) for a fluidic device (100), the method comprising
adhering an adhesive substance (115) to packing material (114) adapted for separating different components of a sample.

10. The method of claim 9, comprising at least one of the following features:
inserting the packing composition (110) in the column tube (101) for manufacturing a fluidic device (100) for separating different components of a fluid;
initiating the adhering by one of the group consisting of irradiating the adhesive substance (115) with electromagnetic radiation, supplying heat to the adhesive substance (115), and supplying oxygen to the adhesive substance (115);
before providing the adhesive substance (115) for adhering, treating the packing material (114) with a solvent adapted to fill pores of the packing material (114) so as to prevent the adhesive substance (115) from entering the pores of the packing material (114) when providing the adhesive substance (115);
before providing the adhesive substance (115) for adhering, treating the packing material (114) with a highly viscous and/or a non-polar solvent adapted to fill pores of the packing material (114) so as to prevent the adhesive substance (115) from entering the pores of the packing material (114) when providing the adhesive substance (115).
